# EUROPÄISCHE PATENTSCHRIFT

(11) **EP 0 748 472 B1**
(45) Veröffentlichungstag und Bekanntmachung des Hinweises auf die Patenterteilung: **15.12.1999**
(21) Anmeldenummer: 95909573.8
(22) Anmeldetag: 01.03.1995
(51) Int. Cl.: G06E 3/00, G06E 1/04

(54) **OPTISCHER VEKTORMULTIPLIZIERER FÜR NEURONALE NETZE**
OPTICAL VECTOR MULTIPLIER FOR NEURAL NETWORKS
MULTIPLICATEUR VECTORIEL OPTIQUE POUR RESEAUX NEURONAUX

(30) Priorität: 02.03.1994 AT 44394; 17.02.1995 AT 29695
(43) Veröffentlichungstag der Anmeldung: 18.12.1996
(73) Patentinhaber: Budil, Matthias, 1190 Wien (AT)
(72) Erfinder: Budil, Matthias, 1190 Wien (AT)
(86) Internationale Anmeldenummer: AT9500039
(87) Internationale Veröffentlichungsnummer: WO9524006

(56) Entgegenhaltungen:
- EP-A- 0 450 526
- DE-A- 4 019 748
- OPTICAL ENGINEERING, Bd. 28, Nr. 4, 1.April 1989 Seiten 447-455, XP 000111787 ATHALE R A ET AL 'COMPACT ARCHITECTURES FOR ADAPTIVE NEURAL NETS'
- OPTIK, Bd. 91, Nr. 1, 1.Juli 1992 Seiten 41-45, XP 000291384 YANG X ET AL 'FULLY PARALLEL OPTICAL MATRIX-MATRIX MULTIPLIER USING SPHERICAL LENS ARRAY'
- PROCEEDINGS OF THE IEEE, Bd. 72, Nr. 7, Juli 1984 NEW YORK US, Seiten 931-941, ATHALE ET AL. 'Optical processing using outer-product concepts'

## Beschreibung

Die Erfindung betrifft einen optischen Vektormultiplizierer, der Rechnungen der linearen Algebra durchführen kann, wobei eine Lichtquelle und zwei um 90 Grad gegeneinander verdrehte Lichtmodulatoren (11,12,21,22) mit streifenförmigen Modulatorzellen, die einen Vektor repräsentieren, mit einem matrixförmigen bzw. schachbrettförmigen Lichtmodulator (13,23), der eine Matrix repräsentiert, optisch in Reihe geschaltet sind, bzw. betrifft die Erfindung einen optischen Vektormultiplizierer, der Rechnungen der linearen Algebra durchführen kann, wobei ein Feld von einzeln ansteuerbaren Lichtquellen (31), die einen Vektor repräsentieren, optische Einrichtungen, die das Licht der Lichtquellen so aufteilen, daß eine streifenförmige parallele Intensitätsverteilung entsteht, und ein zu dieser Intensitätsverteilung um 90 Grad verdrehter Lichtmodulator (32) mit streifenförmigen Modulatorzellen, der einen Vektor repräsentiert, mit einem matrixförmigen bzw. schachbrettförmigen Lichtmodulator (33), der eine Matrix repräsentiert, optisch in Reihe geschaltet sind.

Bisher sind optische Computer bekannt, die Vektor-Matrix-Multiplikationen und das äußere Produkt berechnen können und dabei elektrooptische Modulatoren oder Lichtquellenfelder verwenden. Die englischen Patentschrift GB-A-2 267 165 (SHARP) zeigt einen optischen Prozessor, der mit Hilfe zweier Lichtwege sowohl eine Vektor-Matrix-Multiplikation als auch das äußere Produkt zweier Vektoren bilden kann. Die Ergebnismatrix des äußeren Produkts kann im Bereich der Zellen des Matrixmodulators gespeichert werden. Diese Anordnung ist jedoch nicht in der Lage, zugleich die transponierte Matrix zu verwenden. Die deutsche Offenlegungsschrift DE-A-40 19 748 (ROBERT BOSCH GMBH) zeigt eine Anordnung zur Durchführung von Vektor-Matrix-Multiplikationen, wobei eine flächenhafte Lichtquelle, ein zeilenförmig gerastertes Lichtventil, eine gerasterte Blende und ein spaltenförmig gerasterter Photodetektor optisch in Reihe geschaltet sind. Auch diese Anordnung ist nicht in der Lage, zugleich die transponierte Matrix zu verwenden. Die Schrift Optik, Bd.91, Nr.1, 1.Juli 1992, Seiten 41-45, (YANG X. ET AL) zeigt wie eine Anordnung einer Lichtquelle und eines streifenförmiger Modulators, die zur Erzeugung von einzeln ansteuerbaren Lichtverteilungen dient, durch ein Array von Leuchtdioden und einer Zylinderoptik ersetzt werden kann. Die europäische Offenlegungsschrift EP-A2-450 526 (HUGHES AIRCRAFT) zeigt einen optischen Prozessor, der das äußere Produkt zweier Vektoren bilden kann.

Mit Hilfe dieser Erfindung können Operationen der linearen Algebra möglichst rasch berechnet werden, obwohl die Matrix durch langsame Flüssigkristallfelder oder durch elektrooptische Modulatoren, deren Zellen nur seriell angesprochen werden können, repräsentiert wird. Weiters kann auch die transponierte Matrix bei der Vektor-Matrix-Multiplikation verwendet werden, das äußere Produkt zweier Vektoren berechnet und die Ergebnismatrix des äußeren Produkts unmittelbar im Bereich der Zellen des Matrixmodulators gespeichert werden. Die Lichtdetektoren können beliebig verteilt angeordnet werden, und weiters kann der Vektormultiplizierer digital arbeiten. Außerdem besteht die Möglichkeit Matrizen mit negativen Elementen darzustellen. Durch diese Eigenschaften eignet sich diese Anordnung besonders für die verschiedensten Modelle der neuronalen Netze und kann auch in kaskadierter Ausführung für mehrschichtige Netze verwendet werden.

Diese Aufgabe wird dadurch gelöst, daß nach dieser Modulatoranordnung im Lichtweg optische Einrichtungen (14,15) angeordnet sind, die die Lichtstrahlen umlenken und/oder aufteilen, um entweder Lichtstrahlen in den Detektoren zweier oder mehrerer im Lichtweg folgender eindimensionaler Lichtdetektorfelder (16,17) zu sammeln, damit Ergebnisvektoren von Vektor-Matrix-Multiplikationen und Vektor-Transponiertmatrix-Multiplikationen gebildet werden können, oder um Lichtstrahlen in den Detektoren eines oder mehrerer im Lichtweg folgender zweidimensionaler Lichtdetektorfelder zu sammeln, damit Ergebnisvektoren von Vektor-Matrix-Multiplikationen und/oder Vektor-Transponiertmatrix-Multiplikationen gebildet werden können.

Durch die 90 Grad verdrehte Anordnung der Vektormodulatoren erreicht man, daß in ein und demselben Aufbau sowohl die Matrix als auch die transponierte Matrix verwendet werden kann. Es muß nur der jeweils andere Vektormodulator bei allen Zeilen oder Spalten gleichmäßig lichtdurchlässig sein. Mit Hilfe der um 90 Grad verdrehten Vektormodulatoranordnung kann auch das äußere Produkt von zwei Vektoren gebildet werden, wobei das Ergebnis durch eine Detektormatrix ermittelt wird. Diese Detektormatrix kann sich auch auf dem schachbrettartigen optischen Modulator befinden, wobei sich jede einzelne Detektorzelle in der Nähe einer Zelle des Matrixmodulators befindet. Dadurch kann dort die Information lokal gespeichert und verarbeitet werden. Bei dieser Anordnung besteht auch die Möglichkeit, Vektoren und Matrizen mit negativen Elementen darzustellen, wobei das Ergebnis durch die Differenz zweier Detektorwerte ermittelt wird. Die beiden Detektoren empfangen Lichtstrahlen, deren Polarisationsebenen normal aufeinander stehen. Zusätzlich besteht die Möglichkeit durch Verwendung einer matrixförmigen Lichtablenkeinrichtung, die auch als Hologramm ausgeführt sein kann, die Detektoren für die Ergebnisvektoren beliebig, möglichst weit voneinander entfernt, anzuordnen, um Beugungseffekte zu minimieren. Durch die beliebige Anordnung der Detektoren, sind auch digitale Varianten des Vektormatrixmultiplizierers möglich.

Die Erfindung ist nachstehend an Hand von in den Zeichnungen dargestellten Ausführungsbeispielen näher erläutert. In Fig.1 ist der prinzipielle Aufbau der optischen Recheneinheit und in Fig.2 die prinzipielle Anordnung der Lichtmodulatoren dargestellt. In Fig.3 ist eine Variante mit einem Lichtquellenstreifen und in Fig.4 eine Variante, die auch mit negativen Matrixelementen arbeiten kann, abgebildet. In Fig.5 sieht man eine Kombination aus einem Matrixmodulator und einem Matrixdetektor. In Fig.6 ist eine Variante dargestellt, die mit diffusem Licht, einer Lichtquellenmatrix oder einem binären Phasengitter arbeitet. In Fig.7 ist der prinzipielle Aufbau der optischen Recheneinheit mit der matrixförmigen Lichtablenkeinrichtung abgebildet. In Fig.8 ist eine Variante mit einem Lichtquellenfeld und in Fig.9 eine Variante, die auch mit digitalen Vektor- und Matrixelementen arbeiten kann, abgebildet. In Fig.10 ist ein 4x4 Matrixmodulator mit matrixförmigen Modulatorelementen, die achtstellige Digitalzahlen darstellen können, abgebildet. In Fig.11 ist ein Element eines matrixförmigen Modulators abgebildet, wobei dieses Element wiederum matrixförmig aus mehreren Modulatorelementen aufgebaut ist und eine digitale Zahl repräsentiert, deren Stellenwerte durch die eingezeichneten Zahlen dargestellt ist. In Fig.12 ist ein Detektorenfeld dargestellt, wobei auf jedem Detektor angegeben ist, von welcher Zeile oder Spalte Licht einfällt. In Fig.13 sieht man Lichtwege von der matrixförmigen Lichtablenkeinrichtung zum Detektorenfeld. In Fig. 14 ist ein Variante dargestellt, die Hologramme als Lichtablenkeinrichtung besitzt und in Fig.15 die Detektorenfelder mit einigen Lichtpunkten.

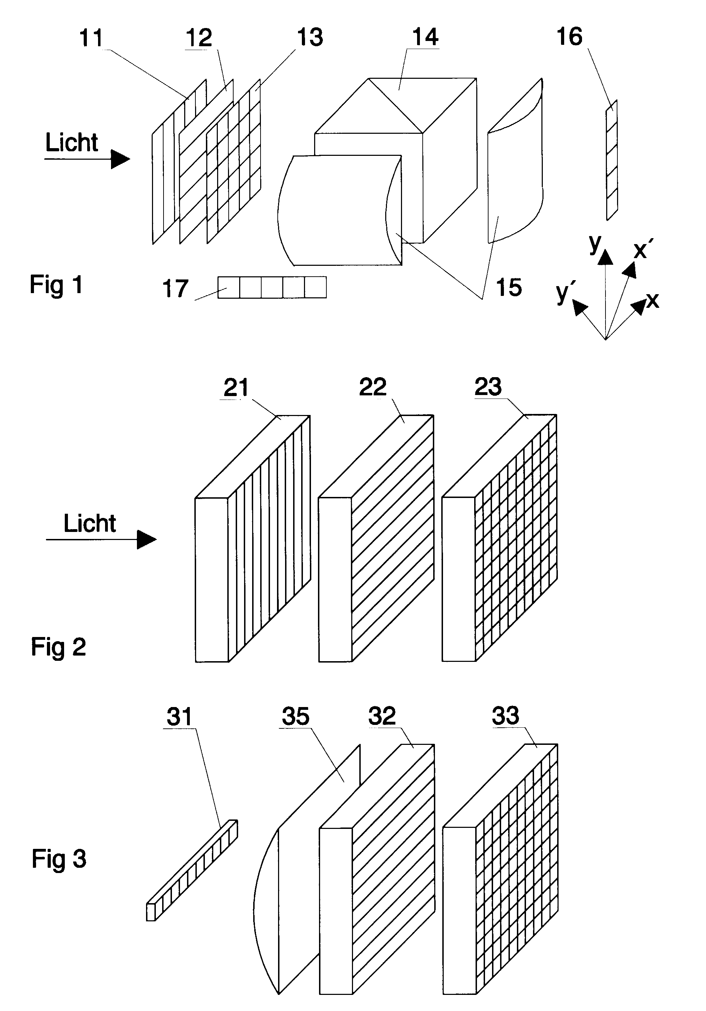

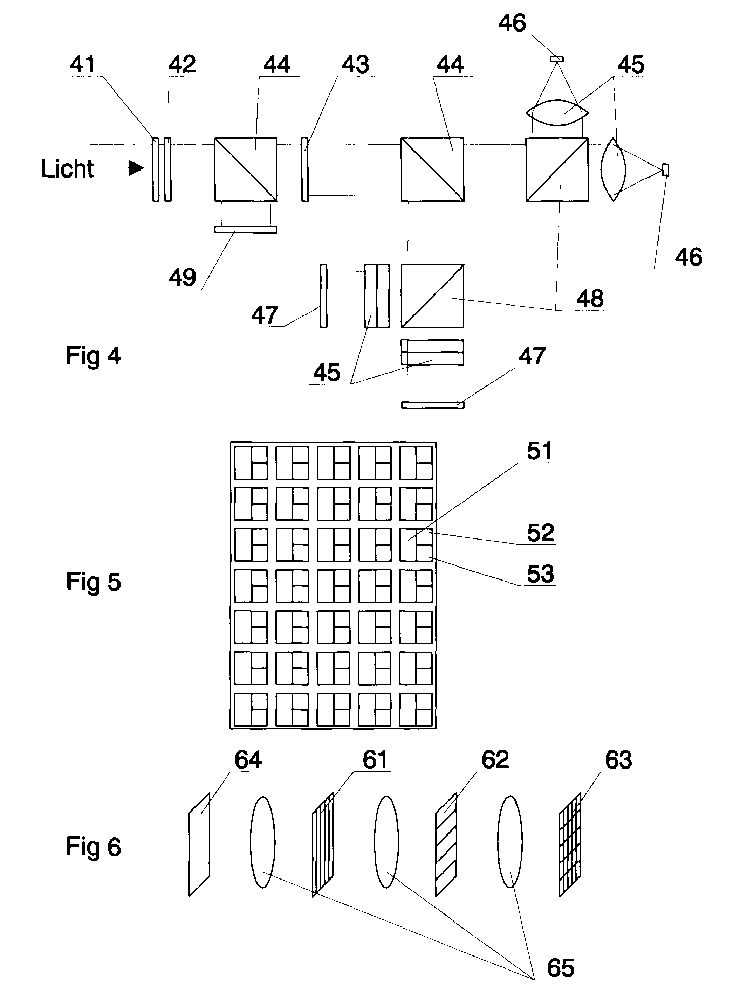

Paralleles Licht, vorzugsweise Laserlicht, fällt durch einen Modulator, der es spaltenförmig amplitudenmoduliert. Das wird z.B. dadurch erreicht, daß das Licht zuerst durch einen Polarisator fällt, der es in x'-Richtung polarisiert, wobei die x'-Richtung 45 Grad zur x-Richtung geneigt ist, dann durch einen transversalen elektrooptischen Modulator (11,21), der in Sandwichbauweise aufgebaut ist und eine Phasenmodulation des Lichtes zeilenweise erzeugt, und dann wiederum durch einen Polarisator, der normal auf die x'-Richtung, also in y'-Richtung steht. Nach dieser Anordnung erhält man Licht, das zeilenweise amplitudenmoduliert ist und in y'-Richtung polarisiert ist. In Fig.1 und 2 sind nur die Modulatoren (11,12,21,22) ohne die Polarisatoren schematisch dargestellt. Nach dem Polarisator folgt wiederum ein Vektormodulator (12,22), der um 90 Grad zu dem ersten Modulator verdreht ist und ein Polarisator, der zur x'-Richtung ausgerichtet ist. Dann folgt ein schachbrettförmiger Modulator (13,23), dessen Zeilen und Spalten mit den beiden Vektormodulatoren übereinstimmen, und wiederum ein Polarisator in y'-Richtung. Arbeitet dieser Matrixmodulator mit Flüssigkristallen, so muß die Polarisationsebene des letzten Polarisators und die Polarisationsrichtung vor dem Matrixmodulator entsprechend angepaßt werden. Nach der Modulatorenanordnung folgt ein Strahlteiler (14), wobei die beiden Lichtstrahlen durch zwei Zylinderlinsen (15) auf zwei Detektorzeilen (16,17) fokussiert werden, die jeweils, bezogen auf den Lichtweg, normal aufeinander stehen, wobei die Detektorzeile (16) im geraden Strahl entweder nach der x- oder der y-Richtung ausgerichtet sein kann. Durch diese Anordnung kann sowohl eine Vektor-Matrix-Multiplikation als auch eine Vektor-Transponiertmatrix-Multiplikation durchgeführt werden. Durch die beiden um 90 Grad verdrehten Vektormodulatoren (11,12,21,22), kann zusätzlich das äußere Produkt zweier Vektoren gebildet werden, wobei das Ergebnis durch einen matrixförmig modulierten Lichtstrahl dargestellt und durch eine Detektormatrix ermittelt wird. Bei der in Fig.1 und Fig.2 dargestellten Anordnung muß sich diese Detektormatrix direkt auf dem Matrixmodulator (13,23) befinden, wobei diese Anordnung den Vorteil besitzt, daß das jeweilige Element der Produktmatrix gleich an der Stelle, wo sich auch eine Zelle des Matrixmodulators befindet, durch eine Detektorzelle der Detektormatrix ermittelt werden kann und das Ergebnis dort lokal verarbeitet werden kann. In Fig.4 ist die Detektormatrix an einer anderen Stelle angeordnet, wobei der Strahl zwischen den Vektormodulatoren und dem Matrixmodulator aufgeteilt wird.

Die Funktion des optischen Rechenwerkes ist durch eine zweimalige örtliche Dämpfung des Lichtstrahls, entsprechend einer elementweisen Multiplikation und einer Sammlung von Lichtstrahlen durch Zylinderlinsen, entsprechend einer zeilen- oder spaltenweisen Addition, begründet. Je nachdem, ob gerade die Vektor-Matrix-Multiplikation oder die Vektor-Transponiertmatrix-Multiplikation gewünscht ist, wird einer der beiden Vektormodulatoren gleichmäßig lichtdurchlässig gemacht und der andere wird entsprechend den Vektorelementen angesteuert. Die zugehörige Detektorlinsenkombination steht normal zu dem angesteuerten Modulatorstapel bezogen auf den Lichtweg, d.h. Zylinderachse der Linse und Detektorzeile haben die gleiche Richtung im Lichtweg wie die einzelnen Zeilen des zugehörigen Modulatorstapels. Mit Hilfe des anderen Modulatorstapels können auch jeweils ganze Spalten oder Zeilen der Matrix mit einem Faktor multipliziert werden, falls es erforderlich ist. Eine weitere Variante des optischen Rechenwerkes ist in Fig.3 schematisch abgebildet. Bei dieser Variante wurde der erste Vektormodulator durch eine Zeile von Lichtquellen (31), zB. Laserdioden, und eine Zylinderlinse (35) ersetzt. Die Vektorelemente werden jetzt durch die Intensität der einzelnen Lichtquellen dargestellt. Bei dieser Anordnung muß man Sorge tragen, daß Lichtstrahlen von benachbarten Lichtquellen nicht in den jeweiligen Lichtweg geraten und dadurch die Rechnung verfälschen. Das kann mit Hilfe von kleinen Linsen, die sich vor den Lichtquellen befinden und garantieren, daß das Licht nur spalten- bzw. zeilenweise aufgefächert wird, und durch Blenden erreicht werden. In Fig.3 sind Linsen und Blenden nicht dargestellt.

Bei Verwendung eines polarisierenden Strahlteilers können die Matrixelemente auch vorzeichenbehaftet sein. Die beiden Strahlkomponenten enthalten dann Licht, das, auf den Lichtweg bezogen, normal zueinander polarisiert ist. Die Strahlkomponenten durchlaufen die gleiche Linsendetektoranordnung (45,46,47) und die beiden Ergebnisvektoren werden voneinander abgezogen. Verläßt der Lichtstrahl den Matrixmodulator (43) unter 45 Grad bezogen auf den polarisierenden Strahlteiler, wird eine Null repräsentiert. Unter 0 oder 90 Grad erfolgt eine Darstellung von 1 bzw. -1. In Fig.4 ist eine solche Anordnung schematisch dargestellt. Zuerst stehen die beiden Zeilenmodulatoren (41,42) im Lichtweg, dann folgt ein Strahlteiler (44), der das Licht sowohl durch den Matrixmodulator (43), als auch auf den Produktmatrixdetektor (49) lenkt. Nach dem Matrixmodulator folgt wiederum ein Strahlteiler (44), der das Licht in zwei polarisierende Strahlteiler (48) lenkt, die dann das Licht in die entsprechenden Zylinderlinsen (45) und Zeilendetektoren (46,47) lenken. Zusätzlich besteht die Möglichkeit, eine Kombination aus einer Modulatormatrix und einer Detektormatrix zu verwenden, wie sie in Fig.5 abgebildet ist, die eine lokale Auswertung des äußeren Produktes ermöglicht. Das Beispiel in Fig.5 enthält pro Zelle einen Modulator (51) und zwei Detektoren (52,53). Negative Zahlen im Vektor, der an den zweiten Modulator angelegt wird, können durch doppelte Ausführung des zweiten Modulators berücksichtigt werden, wobei die Beträge der positiven und negativen Zahlen an zwei benachbarten Zeilen angelegt werden, bzw. Nullen bei positiven Elementen in der Zeile für negative Zahlen und umgekehrt. Der eine Detektor (52) ist dann für die positiven Zahlen und der andere (53) für die negative Zahlen und die Modulatorzelle (51) für beide zuständig. Die entsprechenden Detektorzeilen (16) müssen natürlich auch doppelt ausgeführt sein und ihr Meßergebnis entsprechend interpretiert werden. Weiters können die positiven und negativen Zahlen auch im Zeitmultiplexverfahren hintereinander angelegt werden. Eine andere Möglichkeit ist, daß sich vor den beiden Detektoren und den Modulatorzellen Polarisatoren befinden, die einen zweiten Vektor mit negativen Elementen für das äußere Produkt zulassen. Diese Methode kann jedoch nicht auf die Vektor-Matrix-Multiplikation angewandt werden. Zusätzlich können sich in den einzelnen Zellen elektronische Schaltungen befinden, die Logik- und Speicherfunktionen durchführen können und das Ergebnis des Lernvorganges kann nachher, auch auf optischen Weg, ausgelesen werden. Eine weitere Variante, die mit diffusem Licht, einer Diodenmatrix (64) oder mit Laserlicht und einem binären Phasengitter, das eine matrixförmige Intensitätsverteilung erzeugt, arbeitet und bei der das Licht durch Linsen (65) in den jeweils nächsten Modulator (61,62,63) projiziert wird, ist auch denkbar, jedoch muß dann der Matrixmodulator (63) nach jeder Zelle eine Mikrolinse und wahlweise Blenden besitzen, damit das Licht parallel weiterverläuft, um so in die Detektorzeile gelenkt zu werden.

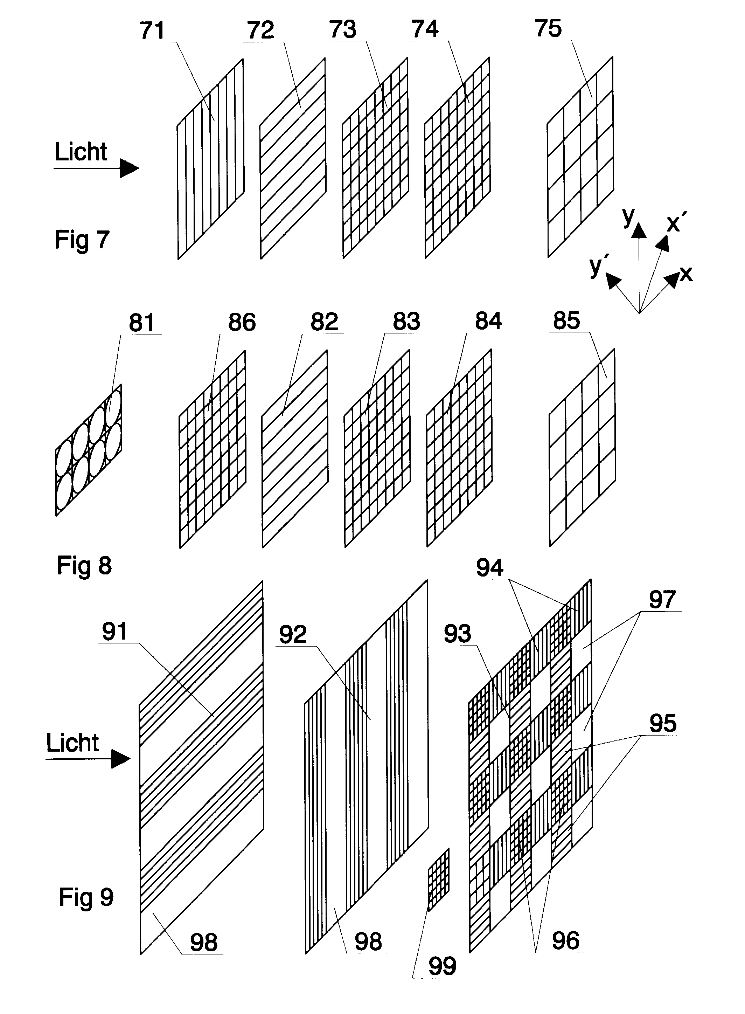

Die in Fig.7 dargestellte optische Recheneinheit arbeitet wie die optische Recheneinheit in Fig.1, wobei die Lichtdetektoren (75) nicht in einer Linie sondern auf einer Ebene, zB. matrixförmig, angeordnet sind. Damit diese Detektoren von Licht aus einer einzelnen Zeile oder einer einzelnen Spalte des Matrixmodulators beleuchtet werden, muß statt einer Zylinderlinse eine matrixförmige Lichtablenkeinrichtung (74) verwendet werden. Durch die zweidimensionale Anordnung der Detektoren vergrößern sich ihre Abstände gegenüber der eindimensionalen Anordnung wesentlich. Wenn zB. 100 Detektoren matrixförmig angeordnet werden, ergibt das einen elfmal größeren Abstand der Detektorenmittelpunkte, wenn die Seitenlänge der matrixförmigen Anordnung gleich der Länge der linienförmigen Anordnung ist. Außerdem können die Detektoren auch dreidimensional verteilt werden, indem sie auf einer gewölbten Fläche oder auf Sockeln angebracht werden, um die Lichtstrahlen möglichst senkrecht einfallen zu lassen. Durch die Vergrößerung der Abstände wird Übersprechen zu benachbarten Detektoren durch Lichtbeugungseffekte vermindert. Die Beugung bewirkt, daß die Lichtpunkte auf den Detektoren eine endliche Ausdehnung haben, wodurch der Abstand der Detektorenmittelpunkte nicht beliebig klein gemacht werden kann. Durch die flächige Anordnung der Lichtpunkte bzw. der Detektoren können Vektoren mit wesentlich mehr Elementen verarbeitet und damit die Leistung des Rechenwerkes entsprechend gesteigert werden. Weiters wird dadurch die Bildung von Zwischenergebnissen ermöglicht, indem in einem Detektor nicht eine ganze Zeile oder Spalte summiert wird, sondern nur ein Teil davon und die weitere Verarbeitung auf elektronischem Weg erfolgt. Entsprechend der Unterteilung der Zeilen und Spalten müssen mehr Detektoren vorhanden sein. Die Bildung von Zwischenergebnissen kann von Vorteil sein, weil dabei zB. bei der digitalen Variante nicht zu große Summen entstehen, die noch genau weiterverarbeitet werden können. Bei Verwendung von Polarisatoren können auch bei dieser Variante Matrixelemente vorzeichenbehaftet sein. Die matrixförmige Lichtablenkeinrichtung muß dann doppelt so viele Strahlkomponenten erzeugen. Dadurch werden doppelt so viele Detektoren benötigt und es entstehen jeweils zwei Ergebnisvektoren für die positiven und negativen Anteile. Die beiden Ergebnisvektoren werden auch hier anschließend voneinander abgezogen. Die Polarisatoren können sich sowohl auf der matrixförmigen Lichtablenkeinrichtung befinden, als auch auf den Detektoren. Befinden sie sich auf beiden, hat das den Vorteil, daß sich das Licht der positiven und negativen Zahlen nicht beeinflussen kann.

Die matrixförmige Lichtablenkeinrichtung hat die Aufgabe jeden Lichtstrahl, der aus dem Matrixmodulator kommt, in die dafür vorgesehenen Detektoren (75,85) zu lenken, wobei zu bedenken ist, daß sowohl ein Lichtstrahl auf einen Detektor für das Ergebnis der Vektor-Matrix-Multiplikation, als auch ein weiterer Lichtstrahl auf einen Detektor für das Ergebnis der Vektor-Transponiertmatrix-Multiplikation fallen muß. Das kann dadurch erreicht werden, indem jeder Lichtstrahl durch eine Kombination aus einem Mikrostrahlteiler und einem Mikroprisma aufgeteilt und in die beiden Detektoren gelenkt wird, oder indem zwei Mikroprismen nebeneinander in jedem Lichtstrahl angeordnet werden und jedes eine Hälfte des Lichtstrahls in die beiden Detektoren lenkt. Zusätzlich kann auch eine Fokusierung durch Mikrolinsen erfolgen, die jedoch nicht erforderlich ist, wenn die Detektoren oder die Beugungslichtflecke größer als die Lichtstrahlen selbst sind. Weiters kann man für diese Aufgabe ein Feld von Hologrammen oder ein Feld von binären oder multilevel Phasengitter verwenden. Bei den Hologrammen ist zu beachten, daß je nach Ausführung unerwünschte Lichtstrahlen entstehen, wobei die Detektoren so angeordnet werden müssen, daß diese Lichtstrahlen nicht stören. Bei Hologrammen entsteht zusätzlich zu jedem abgelenkten Strahl auch ein Strahl der um den entgegengesetzten Winkel abgelenkt ist. Außerdem ist ein nicht abgelenkter Strahl vorhanden und es können Ablenkwinkel höherer Ordnung auftreten. Binäre oder multilevel Phasengitter reduzieren die unerwünschten Lichtstrahlen.

Die in Fig.8 dargestellte Variante funktioniert so wie die Variante in Fig.3, wobei nicht nur die Detektoren sondern auch die Lichtquellen, zB. Laserdioden, flächig angeordnet sind, wobei eine dreidimensionale Anordnung auf gewölbten Flächen oder auf Sockeln auch möglich ist. Bei dieser Variante wurde der erste Vektormodulator durch ein Feld von Lichtquellen (81), zB. Laserdioden, und eine matrixförmige Lichtablenkeinrichtung ersetzt. Die Vektorelemente werden jetzt durch die Intensität der einzelnen Lichtquellen dargestellt. Vor den Lichtquellen befindet sich ein Linsenfeld, das eine streifenförmige Lichtverteilung auf der nachfolgenden matrixförmigen Lichtablenkeinrichtung erzeugt. Von dieser geht ein paralleles matrixförmiges Bündel von Lichtstrahlen aus, das die gleiche Verarbeitung erfährt, wie das Licht in der Variante in Fig.7 nach dem ersten streifenförmigen Modulator. Weiters können auch hier wieder Hologramme zum Einsatz kommen, wobei statt dem streifenförmigen Muster auch Streifen von Lichtpunkten erzeugt werden können. Dabei befindet sich vor jeder Lichtquelle zB. ein binäres Phasengitter mit Mikrooptik, das eine Linie von Lichtpunkten auf der matrixförmigen Lichtablenkeinrichtung in der entsprechenden Spalte erzeugt, die durch die Lichtquelle in ihrer Intensität moduliert werden. Eine weitere Variante, die mit diffusem Licht, mit einer Diodenmatrix, oder mit Laserlicht und einem binären Phasengitter, das eine matrixförmige Intensitätsverteilung erzeugt, arbeitet und bei der das Licht durch Linsen in den jeweils nächsten Modulator projiziert wird, ist auch denkbar. Jedoch muß dann der Matrixmodulator nach jeder Zelle eine Mikrolinse und wahlweise Blenden besitzen, damit das Licht parallel weiterverläuft, um in die Detektorzeile gelenkt zu werden, wobei diese Mikrolinse auch in der matrixförmigen Lichtablenkeinrichtung integriert bzw. als Hologramm ausgeführt sein kann.

In Fig.9 ist eine digitale Variante des optischen Vektormultiplizierers dargestellt, wobei die matrixförmig Lichtablenkeinrichtung nicht abgebildet ist. Die Elemente des matrixförmigen Lichtmodulators bestehen aus kleinen streifenförmigen Modulatoren für die Elemente der Matrix (94) und der transponierten Matrix (95), aus einem Feld von Detektoren (96) für das Ergebnis des äußeren Produktes und einem optisch ungenützten Bereich (97), der zB. für elektronische Schaltungen verwendet werden kann. Die streifenförmigen Modulatoren haben dünne Modulatorstreifen, die die Vektorelemente repräsentieren, und dicke Streifen (98), die das Licht unmoduliert passieren lassen. Diese dicken Streifen stehen jeweils im Lichtweg vor den optisch ungenützten Bereichen des matrixförmigen Modulators. Die Modulatoren bei der binären Variante schalten das Licht aus und ein, wodurch eine binäre Multiplikation mit Hilfe zweier hintereinander geschalteten Modulatoren realisiert wird. Wird ein anderes Zahlensystem verwendet, dann wird der Strahl diskret auf mehreren Stufen moduliert. Eine digitale Zahl wird durch einen Stapel von Modulatoren dargestellt. Werden zwei solche Stapel gekreuzt hintereinander angeordnet, entsteht eine Lichtstrahlenmatrix, in welcher Zwischenprodukte zweier digitaler Zahlen enthalten sind, die nur noch jeweils um eine Stelle verschoben addiert werden müssen, um das Endergebnis der Multiplikation dieser beiden Zahlen zu erhalten. Wird mit Hilfe der digitalen Variante das äußere Produkt gebildet, dann entsteht eine Matrix von matrixförmigen Zwischenprodukten, die mit den Detektorenfeldern (96) empfangen werden. Die Endergebnisse werden durch elektronische Verarbeitung gebildet. Weiters können die Zwischenprodukte auch optisch, jeweils um eine Stelle versetzt, addiert werden, indem sich vor jedem Detektorfeld eine matrixförmige Lichtablenkeinrichtung (99) befindet. In Fig.9 ist bei einem Element diese Bauweise abgebildet. Diese Maßnahme reduziert die Anzahl der Detektoren, wobei zu beachten ist, daß in den Detektoren Zahlenwerte entstehen, die größer als die Ziffern der digitalen Zahlen sind. Genauso entstehen hinter dem matrixförmigen Modulator Zwischenprodukte bei der Vektor-Matrix-Multiplikation und bei der Vektor-Transponiertmatrix-Multiplikation. Diese werden durch eine Lichtablenkeinrichtung auf optischem Wege addiert, wobei die einzelnen Matrizen der Zwischenprodukte überlagert werden, oder zugleich auch die Zwischenergebnisse stellenrichtig addiert werden können. Bei der nachfolgenden elektronischen Weiterverarbeitung muß wiederum berücksichtigt werden, daß in den Detektoren Zahlenwerte entstehen, die wesentlich größer sind als die Ziffern der digitalen Zahlen. Negative Matrixzahlen können auch hier, wie bei der analogen Variante, durch Polarisatoren und doppelte Ausführung der Detektoren dargestellt werden. Negative Vektorelemente können durch doppelte Ausführung der Streifenmodulatoren oder durch Zeitmultiplexverfahren dargestellt werden.

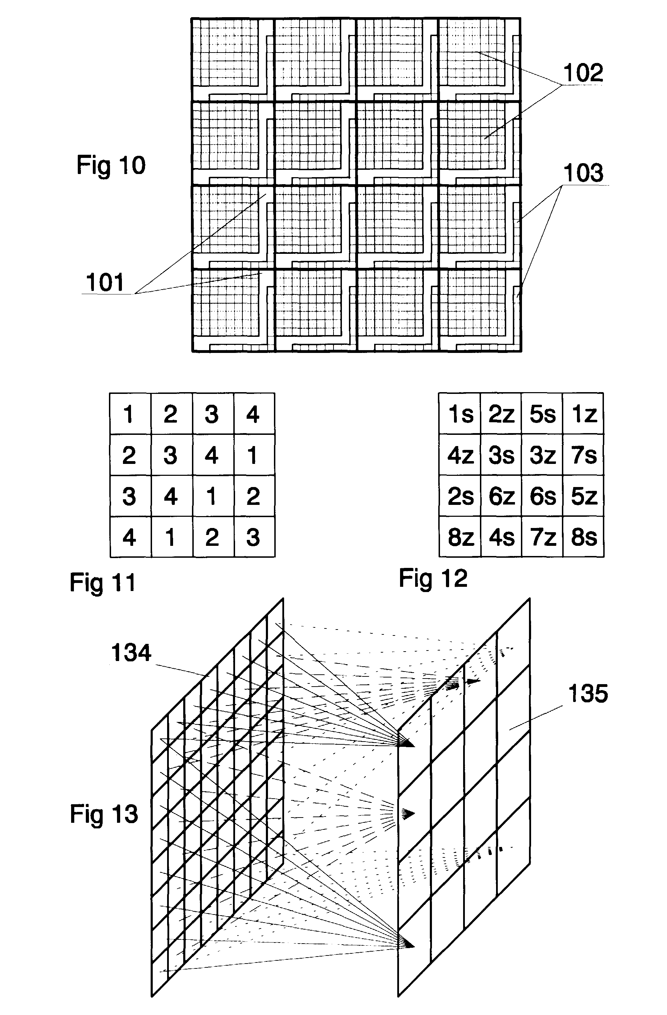

In Fig.10 ist ein matrixförmiger Modulator einer digitalen Variante abgebildet, wobei die einzelnen Zahlen in den matrixförmigen Modulatorelementen (101), äquivalent wie in Fig.11 dargestellt, repräsentiert werden. Die Zahlen in Fig.11 geben die Stellen einer vierstelligen Digitalzahl an. Jede Stelle ist viermal dargestellt, die Stellen sind diagonal in einer Richtung gleich, nehmen in die andere Richtung bis zur Hauptdiagonalen zu und beginnen dann wieder mit der ersten Stelle. Durch diese Darstellung kann diese Modulatorzelle sowohl für die Vektor-Matrix-Multiplikation als auch für die Vektor-Transponiertmatrix-Multiplikation verwendet werden. Die Weiterverarbeitung erfolgt wie in der Variante in Fig.9, wobei die unterschiedliche Anordnung der Stellen der Zwischenprodukte zu beachten ist. Für die Bildung des äußeren Produktes kann sich auch hier eine matrixförmige Lichtablenkeinrichtung vor den Modulatorzellen befinden, die die Lichtstrahlen geradeaus in die Modulatorzellen (102) und schräg in die Detektoren (103) des äußeren Produktes lenkt. Dazu kann ein Feld aus Strahlteilern oder ein Hologrammfeld verwendet werden, wobei Lichtwege höhere Ordnung, die zu benachbarten Zellen verlaufen, durch Blenden unterbrochen werden können. Wird bei dieser Ausführung das Licht durch Linsen von einem Modulator zum anderen projiziert, dann muß es bereits vor den matrixförmigen Lichtablenkeinrichtungen, die sich vor den Modulatorzellen befinden, durch ein Mikrolinsenfeld parallelisiert werden. Außerdem kann man auf die matrixförmige Lichtablenkeinrichtung vor den Modulatorzellen verzichten und bei jeder Zelle der Modulatorelemente einen Detektor für das äußere Produkt vorsehen, wobei die Weiterverarbeitung elektronisch erfolgt.

In Fig.12 ist ein Detektorenfeld dargestellt, wobei auf jedem Detektor angegeben ist, ob Licht von einer Zeile (z) oder Spalte (s) einfällt und welche Nummer diese Zeile oder Spalte hat. In diesem Beispiel sieht man, daß sich die Numerierungen gegenseitig schachbrettförmig durchdringen und von einer Seite zur anderen zeilen- und spaltenförmig zunehmen. Durch diese Anordnung wird ein möglichst gleichlanger Signalweg erreicht und ein geringer Ablenkwinkel der Lichtstrahlen ermöglicht. In Fig.13 sind einige Lichtwege von der matrixförmigen Lichtablenkeinrichtung (134) zu dem Detektorenfeld (135) eingezeichnet. Wird ein Hologramm verwendet, dann können unerwünschte Lichtstrahlen bei dieser Ausführung störend wirken.

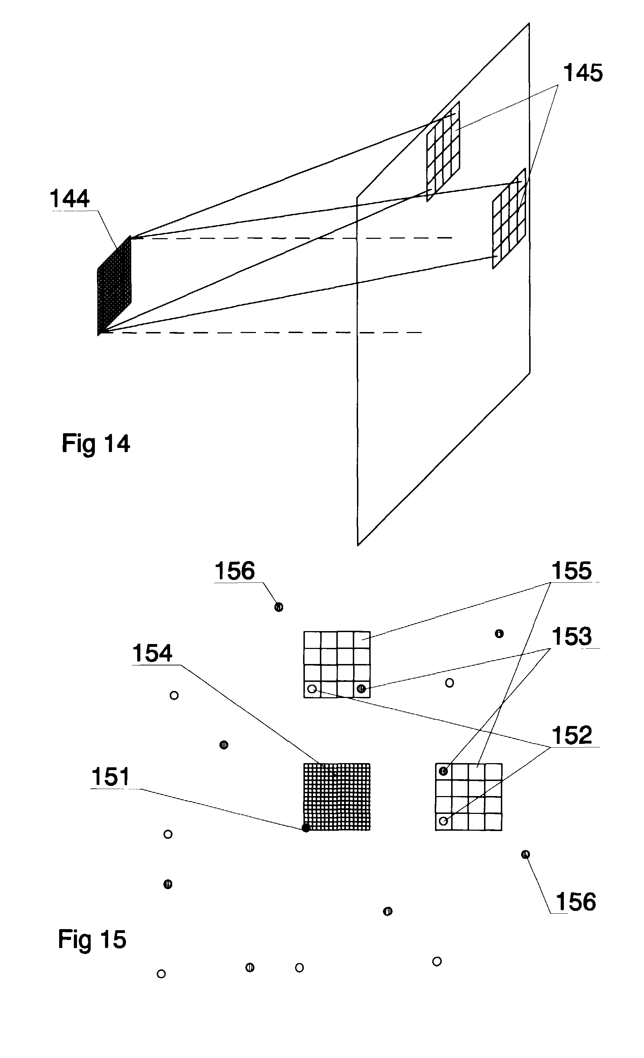

In Fig.14 ist eine Variante dargestellt, die Hologamme als Lichtablenkeinrichtung (144) besitzt, wobei die Detektorenfelder (145) so angeordnet sind, daß unerwünschte Lichtstrahlen nicht auf Detektoren fallen. Die erwünschten Lichtstrahlen sind in Fig.14 durchgezogen und die unerwünschten geradeauslaufenden sind strichliert gezeichnet. Es gibt noch weitere unerwünschte Lichtstrahlen die wegen der Übersichtlichkeit der Zeichnungen nicht abgebildet sind. Damit zusätzliche unerwünschte Lichtstrahlen, die durch die Hologramme entstehen, nicht auf Detektoren fallen, müssen die Lichtstrahlen um große Winkel abgelenkt werden. Dadurch entstehen die unerwünschten Strahlen unter mehrfach so großen Winkeln, wodurch für die Detektorenfelder (145) ein entsprechender Platz gefunden werden kann. In beiden Detektorfeldern sind die Detektoren matrixförmig angeordnet. Das Licht aus den linken Spalten der Lichtablenkeinrichtung wird in die Detektoren auf der linken Seite des Spaltendetektorenfeldes und aus den rechten Spalten der Lichtablenkeinrichtung in die Detektoren auf der rechten Seite des Spaltendetektorenfeldes gelenkt, wobei für jede Spalte der Lichtablenkeinrichtung zumindest ein Detektor vorhanden ist und sukzessive von links nach rechts die Detektoren von den Spalten der Lichtablenkeinrichtung beleuchtet werden. Wenn man die einzelnen Spalten auf der Lichtablenkeinrichtung von links nach rechts numeriert, erhalten die zugehörigen Detektoren Nummern, die in den Detektorenspalten fortlaufen. Für die Darstellung von negativen Vorzeichen der Matrix können pro Spalte der Lichtablenkeinrichtung zwei und bei digitaler Ausführung auch mehrere Detektoren vorhanden sein. Für die Zeilen der Lichtablenkeinrichtung gilt analog das gleiche. Das Licht oberer Zeilen wird auf obere Detektoren, und jenes unterer Zeilen auf untere Detektoren des Zeilendetektorenfeldes gelenkt.

In Fig.15 sind die Detektorenfelder (155) noch einmal, von der Rückseite aus gesehen, abgebildet. Wobei die Lichtablenkeinrichtung auch eingezeichnet ist, um den Ursprung der Lichtstrahlen zu verdeutlichen. In der Zeichnung sind die, am Detektorfeld erzeugten Lichtpunkte, durch Kreise stilisiert. Die Lichtstrahlen kommen vom Element (151) der Lichtablenkeinrichtung der ersten Spalte und der ersten Zeile. Der Lichtpunkt des geradeaus verlaufenden Lichtstrahles hat einen Vollkreis, während die restlichen unerwünschten Lichtpunkte durch dünn umrandete Kreise dargestellt sind. In Fig.15 sind zwei Möglichkeiten der Detektorbeleuchtung eingezeichnet. Bei der ersten wird bei den Detektorzeilen links, bzw. bei den Detektorspalten unten, mit der Nummerierung (weiße Kreise) (152) begonnen. Bei der zweiten wird rechts bzw. oben (graue Kreise) (153) begonnen, wobei bei dieser zweiten Möglichkeit die Lichtpunkte (156) den Detektorenfeldern näher kommen. Für die Reduzierung unerwünschter Lichtpunkte können auch binäre oder multilevel Phasengitter zum Einsatz kommen. Weiters kann man für die Vektor-Matrix-, die Vektor-Transponiertmatrix-Multiplikation und, wenn benötigt, das Vorzeichen der Matrixelemente verschiedene Hologrammelemente verwenden, wodurch jedes Element nur einen erwünschten Lichtpunkt erzeugt und dadurch viel weniger unerwünschte Lichtpunkte entstehen. Jedoch wird durch diese Maßnahme die Fläche der Elemente verkleinert, wodurch Beugungseffekte größer werden. Der Vorteil der Variante in Fig.14 besteht darin, daß der Einsatz von Hologrammen eine günstige Massenproduktion ermöglicht.

Die oben beschriebenen Anordnungen eignen sich hervorragend zur Berechnung von neuronalen Netzen. Bei diesen Modellen werden wiederholt Vektormatrixmultiplikationen ausgeführt, wobei die Matrix selbst ihre Elemente nur langsam ändert. Durch Verwendung von schnellen elektrooptischen Vektormodulatoren können die Vektoren rasch angelegt werden und der Matrixmodulator kann wesentlich langsamer arbeiten. Besonders gut geeignet ist die Ausführung mit der in Fig.5 dargestellten Modulator-Detektor-Anordnung und einem Aufbau wie in Fig.4 jedoch ohne den ersten Strahlteiler. Wenn man solche Anordnungen hintereinander schaltet, erhält man einen optischen Computer für mehrschichtige neuronale Netze. Erfolgt der Lernvorgang nach dem Backpropagationalgorithmus, so wird der Datenvektor, der beispielsweise nur positive Zahlen enthält, an den ersten Modulator angelegt und der Differenzenvektor, der auch negative Zahlen enthält, an den zweiten Modulator. Gleichzeitig erfolgt die Berechnung mit der transponierten Matrix, wie es das Modell verlangt. Zusätzlich wird im Modell auch das äußere Produkt benötigt, das auch gleich mit Hilfe dieser Anordnung ermittelt werden kann. Das Ergebnis liegt auch genau dort vor, wo es benötigt wird, nämlich im Bereich der jeweiligen Modulatorzelle. Die Nichtlinearitäten im Modell können durch sogenannte "Look-up"-Tabellen dargestellt werden, wobei auch das nichtlineare Verhalten der Modulatoren berücksichtigt werden kann. Zusätzlich müssen die Vektoren gespeichert werden, weil sie später wieder benötigt werden, wenn der zurückpropagierte Differenzenvektor anliegt, um das äußere Produkt zu bilden. Um den Speicher- und Verwaltungsaufwand möglichst gering zu halten, sollte abwechselnd ein Vektor vorwärtspropagiert und ein Vektor rückwärtspropagiert werden. Die Änderungen der Matrixelemente können lokal gespeichert werden und entweder nach dem Durchlauf aller Vektoren oder gleich an die Modulatorzellen angelegt werden. Bei Verwendung von langsamen Flüssigkristallmodulatoren muß man mit einer gewissen Zeitverzögerung rechnen, wenn die Änderungen gleich angelegt werden. Bei Änderung nach dem Durchlauf aller Vektoren, kann man die Zeitverzögerung abwarten und erst dann den nächsten Durchlauf starten. Das Ergebnis des Lernvorganges kann nachher ausgelesen werden. Durch die lokale Verarbeitung ist kein großer Verdrahtungsaufwand erforderlich und die Daten können zB. spaltenweise ein- und ausgegeben werden. Dadurch eignet sich dieser optische Computer auch für große Netze mit über 1000 Neuronen je vollvernetzter Schicht. Dauert das Anlegen eines Vektors einige Nanosekunden, erhält man Rechenleistungen von einigen 100 Tera Operationen pro Sekunden. Hat der Matrixmodulator eine Verzögerung von einigen Mikrosekunden, müssen etwa 1000 Vektoren pro Durchlauf angelegt werden, damit sich dadurch keine nennenswerte Verzögerung der Rechenleistung ergibt. Der optische Computer eignet sich auch für andere Modelle der neuronalen Netze, wie zB. Perzeptron, Competitive Learning, BAM und Hopfield, wobei die beiden ersten Modulatoren auch für Normierungs- und Auswahlfunktionen von Zeilen und Spalten geeignet sind und das Ergebnis aus diesen Funktionen gleich in der Modulator-Detektor-Matrix gespeichert werden kann.

## Patentansprüche

1. Optischer Vektormultiplizierer, der Rechnungen der linearen Algebra durchführen kann, wobei eine Lichtquelle und zwei um 90 Grad gegeneinander verdrehte Lichtmodulatoren (11,12,21,22) mit streifenförmigen Modulatorzellen, die einen Vektor repräsentieren, mit einem matrixförmigen bzw. schachbrettförmigen Lichtmodulator (13,23), der eine Matrix repräsentiert, optisch in Reihe geschaltet sind, **dadurch gekennzeichnet, daß** nach dieser Modulatoranordnung im Lichtweg optische Einrichtungen (14,15) angeordnet sind, die die Lichtstrahlen umlenken und/oder aufteilen, um entweder Lichtstrahlen in den Detektoren zweier oder mehrerer im Lichtweg folgender eindimensionaler Lichtdetektorfelder (16,17) zu sammeln, damit Ergebnisvektoren von Vektor-Matrix-Multiplikationen und Vektor-Transponiertmatrix-Multiplikationen gebildet werden können, oder um Lichtstrahlen in den Detektoren eines oder mehrerer im Lichtweg folgender zweidimensionaler Lichtdetektorfelder zu sammeln, damit Ergebnisvektoren von Vektor-Matrix-Multiplikationen und/oder Vektor-Transponiertmatrix-Multiplikationen gebildet werden können.

2. Optischer Vektormultiplizierer, der Rechnungen der linearen Algebra durchführen kann, wobei ein Feld von einzeln ansteuerbaren Lichtquellen (31), die einen Vektor repräsentieren, und optische Einrichtungen, die das Licht der Lichtquellen so aufteilen, daß eine streifenförmige parallele Intensitätsverteilung entsteht, optisch in Reihe geschaltet sind, **dadurch gekennzeichnet, daß** ein zu dieser Intensitätsverteilung um 90 Grad verdrehter Lichtmodulator (32) mit streifenförmigen Modulatorzellen, der einen Vektor repräsentiert, mit einem matrixförmigen bzw. schachbrettförmigen Lichtmodulator (33), der eine Matrix repräsentiert, optisch in Reihe geschaltet ist, und nach dieser Modulatoranordnung im Lichtweg optische Einrichtungen angeordnet sind, die die Lichtstrahlen umlenken und/oder aufteilen, um entweder Lichtstrahlen in den Detektoren zweier oder mehrerer im Lichtweg folgender eindimensionaler Lichtdetektorfelder zu sammeln, damit Ergebnisvektoren von Vektor-Matrix-Multiplikationen und Vektor-Transponiertmatrix-Multiplikationen gebildet werden können, oder um Lichtstrahlen in den Detektoren eines oder mehrerer im Lichtweg folgender zweidimensionaler Lichtdetektorfelder zu sammeln, damit Ergebnisvektoren von Vektor-Matrix-Multiplikationen und/oder Vektor-Transponiertmatrix-Multiplikationen gebildet werden können.

3. Optischer Vektormultiplizierer, gemäß Anspruch 1, **dadurch gekennzeichnet, daß** die Lichtquelle diffuses Licht abgibt, aus einer Lichtquellenmatrix (64) besteht oder mit Hilfe eines binäres Phasengitter oder einer anderen optischen Einrichtung matrixförmige Intensitätsverteilung besitzt, und daß dieses Licht mit Hilfe von Linsen (65) oder anderen optischen Einrichtungen, die im Lichtweg angeordnet sind, auf den jeweils nächsten Modulator oder auf das matrixförmige bzw. schachbrettförmige Lichtdetektorfeld projiziert wird.

4. Optischer Vektormultiplizierer, gemäß Anspruch 1, **dadurch gekennzeichnet, daß** die Lichtquelle paralleles Licht abgibt.

5. Optischer Vektormultiplizierer, gemäß Anspruch 1, 3 oder 4 **dadurch gekennzeichnet, daß** sich entweder auf den Elementen des matrixförmigen bzw. schachbrettförmigen Lichtmodulators Lichtdetektoren (52,53) befinden oder sich ein Strahlteiler (44) vor dem matrixförmigen bzw. schachbrettförmigen Lichtmodulator befindet, der das Licht so aufteilt, daß es auf den matrixförmigen bzw. schachbrettförmigen Lichtmodulator und auf ein zusätzlich vorhandenes matrixförmiges bzw. schachbrettförmiges Lichtdetektorfeld (49) oder mit Hilfe eines weiteren polarisierenden Strahlteilers auf zwei zusätzlich vorhandene matrixförmige bzw. schachbrettförmige Lichtdetektorfelder fällt, damit das äußere Produkt der Vektoren, die durch die zwei um 90 Grad gegeneinander verdrehten Lichtmodulatoren mit streifenförmigen Modulatorzellen repräsentiert werden, gebildet werden kann, und daß elektronische Schaltungen vorhanden sind, die die Signale aus den Detektoren weiterverarbeiten und/oder die Modulatorzellen ansteuern.

6. Optischer Vektormultiplizierer gemäß Anspruch 2, **dadurch gekennzeichnet, daß** sich entweder auf den Elementen des matrixförmigen bzw. schachbrettförmigen Lichtmodulators Lichtdetektoren befinden oder sich ein Strahlteiler vor dem matrixförmigen bzw. schachbrettförmigen Lichtmodulator befindet, der das Licht so aufteilt, daß es auf den matrixförmigen bzw. schachbrettförmigen Lichtmodulator und auf ein zusätzlich vorhandenes matrixförmiges bzw. schachbrettförmiges Lichtdetektorfeld oder mit Hilfe eines weiteren polarisierenden Strahlteilers auf zwei zusätzlich vorhandene matrixförmige bzw. schachbrettförmige Lichtdetektorfelder fällt, damit das äußere Produkt der Vektoren, die durch das Feld von einzeln ansteuerbaren Lichtquellen und den Lichtmodulator mit streifenförmigen Modulatorzellen repräsentiert werden, gebildet werden kann, und daß elektronische Schaltungen vorhanden sind, die die Signale aus den Detektoren weiterverarbeiten und/oder die Modulatorzellen ansteuern.

7. Optischer Vektormultiplizierer gemäß Anspruch 1, 3, 4 oder 5, **dadurch gekennzeichnet, daß** eine oder mehrere der optischen Einrichtungen, die im Lichtweg nach der Modulatoranordnung angeordnet sind und die zur Bildung der Vektor-Matrix-Multiplikation bzw. der Vektor-Transponiertmatrix-Multiplikation dienen, als matrixförmige bzw. schachbrettförmige Lichtablenkeinrichtungen (74) ausgeführt sind, um die Detektoren beliebig anordnen zu können, wobei die Elemente dieser Lichtablenkeinrichtung das Licht umlenken und/oder teilen.

8. Optischer Vektormultiplizierer gemäß Anspruch 2 oder 6, **dadurch gekennzeichnet, daß** eine oder mehrere der optischen Einrichtungen, die im Lichtweg nach der Modulatoranordnung angeordnet sind und die zur Bildung der Vektor-Matrix-Multiplikation bzw. der Vektor-Transponiertmatrix-Multiplikation dienen, als matrixförmige bzw. schachbrettförmige Lichtablenkeinrichtungen (84) ausgeführt sind und/oder daß eine oder mehrere der im Lichtweg nach dem Feld von einzeln ansteuerbaren Lichtquellen folgenden optischen Einrichtungen, die das Licht der Lichtquellen so aufteilen, daß eine streifenförmige parallele Intensitätsverteilung entsteht, als matrixförmige bzw. schachbrettförmige Lichtablenkeinrichtungen (86) ausgeführt sind, um die Detektoren und/oder Lichtquellen beliebig anordnen zu können, wobei die Elemente dieser Lichtablenkeinrichtungen das Licht umlenken und/oder teilen.

9. Optischer Vektormultiplizierer gemäß Anspruch 7 oder 8 **dadurch gekennzeichnet, daß** eine, mehrere oder alle matrixförmigen bzw. schachbrettförmigen Lichtablenkeinrichtungen als Hologrammfelder und/oder Phasengitter ausgeführt sind.

10. Optischer Vektormultiplizierer gemäß Anspruch 7, 8 oder 9 **dadurch gekennzeichnet, daß** die Detektoren auf den Lichtdetektorfeldern (75,85) und/oder, wenn vorhanden, die Lichtquellen auf dem Lichtquellenfeld (81) matrixförmig, beliebig zweidimensional oder beliebig dreidimensional verteilt angeordnet sind.

11. Optischer Vektormultiplizierer gemäß einem der Ansprüche 7 bis 10 **dadurch gekennzeichnet, daß** die Elemente des matrixförmigen bzw. schachbrettförmigen Modulators aus streifenförmigen (94,95) und/oder matrixförmigen bzw. schachbrettförmigen (102) Modulatoren aufgebaut sind, damit digitale Zahlen eines beliebigen Zahlensystems dargestellt werden können, wobei sich optional auf den Elementen des matrixförmigen bzw. schachbrettförmigen Modulators Lichtdetektoren (96,103) und/oder elektronische Schaltungen befinden, die die Signale aus den Detektoren digital weiterverarbeiten und die Modulatorzellen ansteuern und daß die streifenförmigen Modulatoren gegebenenfalls zusätzliche Streifen (98) ohne Modulatorfunktion besitzen, um Modulatorstreifen, die einzelne Zahlen repräsentieren, zu trennen.

12. Optischer Vektormultiplizierer gemäß einem der Ansprüche 7 bis 11 **dadurch gekennzeichnet, daß** sich zwischen dem letzten Lichtmodulator mit streifenförmigen Modulatorzellen und dem matrixförmigen bzw. schachbrettförmigen Modulator (93) Lichtablenkeinrichtungen (99) befinden, die das Licht umlenken und/oder teilen, um es in Detektoren und/oder in Modulatorzellen des matrixförmigen bzw. schachbrettförmigen Modulators zu lenken, damit zusätzliche arithmetische Operationen gebildet werden können.

13. Optischer Vektormultiplizierer gemäß einem der Ansprüche 7 bis 12 **dadurch gekennzeichnet, daß** die Lichtstrahlen von Teilen der Zeilen und/oder Spalten des matrixförmigen bzw. schachbrettförmigen Modulators durch die matrixförmige bzw. schachbrettförmige Lichtablenkeinrichtung in Detektoren gelenkt werden, damit Vektor-Matrix-Multiplikationen und/oder Vektor-Transponiertmatrix-Multiplikationen von Teil matrizen der Matrix, die im matrixförmigen bzw. schachbrettförmigen Modulator repräsentiert wird, gebildet werden können.

14. Optischer Vektormultiplizierer gemäß einem der Ansprüche 1 bis 13 **dadurch gekennzeichnet, daß** der matrixförmige bzw. schachbrettförmige Modulator ein Flüssigkristallfeld ist und/oder daß die streifenförmigen Modulatorzellen als elektrooptische Kristalle ausgeführt sind.

15. Optischer Vektormultiplizierer gemäß einem der Ansprüche 1 bis 14 **dadurch gekennzeichnet, daß** im Lichtweg vor den Lichtdetektoren Polarisatoren und/oder vor den Lichtdetektorfeldern polarisierende Strahlteiler angeordnet sind, damit die Polarisationsebene der Lichtstrahlen ausgewertet werden kann.

16. Optischer Vektormultiplizierer **dadurch gekennzeichnet, daß** dieser in kaskadierter Form hintereinander und/oder parallel geschaltete optische Vektormultiplizierer gemäß einem der Ansprüche 1 bis 15 beinhaltet.

17. Optischer Vektormultiplizierer gemäß einem der Ansprüche 1 bis 16 **dadurch gekennzeichnet, daß** er mit zusätzlichen elektronischen Schaltungen, die, unter anderem, arithmetische Funktionen, logische Funktionen, Signalübertragungsfunktionen und/oder Speicherfunktionen übernehmen, ausgestattet ist, und daß optional die gesamte Funktion von einem herkömmlichen Computer überwacht und das Ergebnis nach einem Lernvorgang gespeichert wird.

## Claims

1. An optical vector multiplier which can carry out linear algebra calculations whereby the light source and two light modulators (11, 12, 21, 22) rotated relative to one another through 90° with strip-form modulator cells representing a vector, with a matrix form or chessboard form light modulator (13, 23) representing a matrix are connected optically in series, characterized in that after this modulator arrangement in the light path, optical devices (14, 15) are arranged which deflect the light beams and/or divide them so that either light beams in the detectors of two or more light detector fields (16, 17) following in the light path are collected, thereby forming resultant vectors of vector- matrix multiplications and vector-transposed matrix multiplications or so that light beams in the detectors of one or more two dimensional light detector fields following in the light path are collected thereby forming resultant vectors of vector matrix multiplications and/or vector-transposed matrix multiplications.

2. An optical vector multiplier for carrying out linear algebra calculations whereby a field of individually controllable light sources (31) representing a vector, optical devices which so divide the light from the light sources that a strip like parallel intensity distribution results, are optically connected in series, characterized in that a light modulator (32) rotated 90° to this intensity distribution andwith strip like modulator cells representing a vector, with a matrix form or chessboard form light modulator (33) representing a matrix is optically connected in series, and following this modulator arrangement in the light path optical devices are arranged which deflect the light beams and/or divide the light beams so that either light beams in the detectors of two or more one dimensional light detector fields following in the light path are collected, thereby forming resultant vectors of vector matrix multiplications and vector transposed matrix multiplications, or so that light beams are collected in the detectors of one or more two dimensional light detector fields following in the light path, whereby resultant vectors of vector matrix multiplications and/or vector transposed matrix multiplications can be formed.

3. An optical vector multiplier according to claim 1, characterized in that the light source produces diffused light and is comprised of a light source matrix (64) or with the aid of a binary phase grid or another optical device with a matrix formed intensity distribution and that this light with the aid of lenses (65) or other optical devices which are arranged in the light path is projected onto a respective next modulator or on the matrix shape or chessboard form light detector fields.

4. An optical vector multiplier according to claim 1 characterized in that the light source produces parallel light.

5. An optical vector multiplier according to claim 1, 3 or 4 characterized in that light detectors (52, 53) are provided either on the elements of the matrix form or chessboard form light modulator or a beam divider (44) is provided ahead of the matrix form or chessboard form light modulator which so divides the light that it falls upon the matrix like or checkerboard like light modulator and upon an additionally provided matrix like or chessboard like light detector field (49) or with the aid of a further polarized beam divider upon two additionally provided matrix like or checkerboard like light detector fields, whereby the cross products of the vectors which are represented by the light modulator with strip like modulator cells rotated 90° relative to another and that electronic circuitry is provided which processes the signals from the detectors and/or controls the modulator cells.

6. An optical vector multiplier according to claim 2 characterized in that either light detectors are provided on the elements of the matrix like or chessboard like light modulator or a beam divider is provided ahead of the matrix like or chessboard like light modulator which so divides the light that it falls upon the matrix like or chessboard like light modulator and upon an additionally provided matrix like or chessboard like light detector field or with the aid of a further polarized beam divider falls upon two additionally provided matrix like or chessboard like light detector fields whereby the cross products of the vectors represented by the field of individually controllable light sources and the light modulator with its strip like modulator cells can be formed and that electronic circuitry is provided for processing the signals from the detectors and/or controls the modulator cells.

7. An optical vector multiplier according to claim 1, 3, 4 or 5 characterized in that one or more of the optical devices which are arranged in the light path following the modulator arrangement and which serves to form the vector matrix multiplication or the vector transposed matrix multiplication is configured as a matrix like or chessboard like light deflecting device (74) with respect to which the detectors are optionally disposed whereby the elements of this light deflecting arrangement can deflect the light and/or divide it.

8. An optical vector multiplier according to claim 2 or 6 characterized in that one or more of the optical devices which are provided in the light path following the modulator arrangement and form the vector matrix multiplication or the vector transposed matrix multiplication is configured as matrix like or chessboard like light deflection devices (84) and/or that one or more of the following optical devices in the light path following the field of individually controllable light sources, so divide the light from the light sources that a strip like parallel intensity distribution results is configured as a matrix like or chessboard like light deflection device (86) so that the detectors and/or light sources can be optionally arranged whereby elements of this light deflection device deflect the light and/or divide it.

9. An optical vector multiplier according to claim 7 or 8 characterized in that one, more or all of the matrix like or chessboard like light deflection devices is configured as a hologram field and/or phase grid.

10. An optical vector multiplier according to claim 7, 8 or 9 characterized in that the detectors are provided on the light detector fields (75, 85) and/or when provided, the light sources are arranged matrix like two-dimensionally on the light source field (81) or are optionally distributed three-dimensionally.

11. An optical vector multiplier according to one of claims 7 - 10 characterized in that the elements of the matrix-like or chessboard-like modulator are constructed of strip-like (94, 95) or matrix-like or chessboard-like modulators (102) so that digital counts of an optional counting system are provided whereby optionally on the elements of the matrix like or chessboard like modulator, light detectors (96, 103) and/or electronic circuitry is provided which digitally further process the signals from the detectors and control the modulator cells and so that the strip like modulators can optionally have additional strips (98) without modulator functions to separate the modulator strips which represent the individual numbers.

12. An optical vector multiplier according to one of claims 7 - 11 characterized in that between the last light modulator with the strip like modulator cells and the matrix like or chessboard like modulator (93) light-deflecting devices (99) are located which deflect the light and/or divide it so that in the detectors and/or in the modulators cells of the matrix like or chessboard like modulator, the light is deflected so that additional arithmetic operations can be carried out.

13. An optical vector multiplier according to one of the claims 7 - 12 characterized in that the light beams from parts of the rows and/or columns of the matrix like or chessboard like modulator are deflected through the matrix like or chessboard like light deflecting devices into detectors, thereby forming vector matrix multiplications and/or vector transposed matrix multiplications of partial matrices of the matrix which is represented by the matrix like or chessboard like modulator.

14. An optical vector multiplier according to one of claims 1 - 13 characterized in that the matrix like or chessboard like modulator is a liquid crystal field and/or the strip like modulator cells are configured as electro optical crystals.

15. An optical vector multiplier according to one of claims 1 - 14 characterized in that in the light path ahead of the light detectors, polarizers and/or ahead of the light detector fields polarizing beam dividers are arranged to enable the polarization plane of the light beam to be evaluated.

16. An optical vector multiplier characterized in that it is provided in cascade form one after another or and/or in parallel form from optical vector multipliers according to one of claims 1 - 15.

17. An optical vector multiplier according to one of claims 1 - 16 characterized in that it is provided with additional electronic circuitry that is equipped to carry out other arithmetic functions, logic functions, signal transfer functions and/or storage functions and that optionally the total function is monitored by a conventional computer and that the result is stored after a learning process.

## Revendications

1. Multiplicateur optique de vecteurs, capable d'effectuer des calculs d'algèbre linéaire, une source lumineuse et deux modulateurs de lumière (11, 12, 21, 22) décalés de 90° l'un par rapport à l'autre et possédant des cellules de modulateurs en forme de bandes, qui représentent un vecteur, étant montés optiquement en série avec un modulateur de lumière (13, 23) en forme de matrice ou de damier, qui représente une matrice, caractérisé en ce que, après ce montage de modulateurs, des dispositifs optiques (14, 15) sont placés sur le trajet de la lumière, dispositifs qui dévient les rayons lumineux ou les divisent, ou les deux, soit dans le but de rassembler des rayons lumineux dans les détecteurs de deux, ou davantage, panneaux (16, 17) unidimensionnels de détecteurs de lumière qui suivent sur le trajet de la lumière, afin que des vecteurs exprimant le résultat puissent être formés par des multiplications de matrices vectorielles et des multiplications de matrices transposées vectorielles, soit dans le but de rassembler des rayons lumineux dans les détecteurs d'un ou plusieurs panneaux de détecteurs de lumière à deux dimensions qui suivent sur le trajet de la lumière, afin que les vecteurs exprimant le résultat puissent être formés par des multiplications dans des matrices vectorielles ou dans des matrices transposées vectorielles, ou les deux.

2. Multiplicateur optique de vecteurs capable d'effectuer des calculs d'algèbre linéaire, un panneau de sources lumineuses (31) pouvant être commandées individuellement et représentant un vecteur, et des dispositifs optiques divisant la lumière des sources lumineuses de telle manière qu'on obtienne une répartition parallèle d'intensités par bandes, étant montés optiquement en série, caractérisé en ce qu'un modulateur de lumière (32) à cellules modulatrices en forme de bandes, décalé de 90° par rapport à cette répartition d'intensités, qui représente un vecteur, est optiquement monté en série avec un modulateur de lumière (33) en forme de matrice ou de damier, et qui représente une matrice, et que, après ce dispositif modulateur, des dispositifs optiques sont placés sur le trajet de la lumière et dévient les rayons lumineux ou les divisent, ou les deux, soit pour rassembler des rayons lumineux dans les détecteurs de deux, ou davantage, panneaux unidimensionnels de détecteurs de lumière qui suivent sur le trajet de la lumière, afin que les vecteurs exprimant le résultat puissent être formés par des multiplications dans des matrices vectorielles ou dans des matrices transposées vectorielles, soit pour rassembler des rayons lumineux dans les détecteurs d'un ou plusieurs panneaux de détecteurs de lumière à deux dimensions, qui suivent sur le trajet de la lumière, afin que les vecteurs exprimant le résultat puissent être formés par des multiplications dans des matrices vectorielles ou dans des matrices transposées vectorielles.

3. Multiplicateur optique de vecteurs selon la revendication 1, caractérisé en ce que la source lumineuse fournit une lumière diffuse, est constituée par une matrice (64) de sources lumineuses ou présente une répartition d'intensités en forme de matrice grâce à une grille de phases binaire ou à un autre dispositif optique, et en ce que cette lumière est projetée, à l'aide lentilles (65) ou d'autres dispositifs optiques placés sur le trajet de la lumière, sur le modulateur le plus proche dans chaque cas ou sur le panneau de détecteurs de lumière en forme de matrice ou de damier.

4. Multiplicateur optique de vecteurs selon la revendication 1, caractérisé en ce que la source lumineuse fournit de la lumière parallèle.

5. Multiplicateur optique de vecteurs selon la revendication 1, 3 ou 4, caractérisé en ce que, soit des détecteurs de lumière (52, 53) se trouvent sur les éléments du modulateur de lumière en forme de matrice ou de damier, soit un diviseur de rayons (44) se trouve devant le modulateur de lumière en forme de matrice ou de damier et divise la lumière de telle manière qu'elle arrive sur le modulateur de lumière en forme de matrice ou de damier et sur un panneau, monté en supplément, de détecteurs de lumière (49) en forme de matrice ou de damier ou, à l'aide d'un autre diviseur de rayons, qui est polarisant, sur deux autres panneaux de détecteurs de lumière en forme de matrice ou de damier, afin que le produit extérieur des vecteurs représentés par les deux modulateurs de lumière à cellules modulatrices en forme de bandes, modulateurs décalés de 90° l'un par rapport à l'autre, puisse être formé, et en ce que cet appareil possè des circuits électroniques qui traitent les signaux provenant des détecteurs ou excitent les cellules modulatrices, ou font ces deux opérations.

6. Multiplicateur optique de vecteurs selon la revendication 2, caractérisé en ce que, soit des détecteurs de lumière se trouvent sur les éléments du modulateur de lumière en forme de matrice ou de damier, soit un diviseur de rayons se trouve devant le modulateur de lumière en forme de matrice ou de damier et divise la lumière de telle manière qu'elle arrive sur le modulateur de lumière en forme de matrice ou de damier et sur un panneau, monté en supplément, de détecteurs de lumière en forme de matrice ou de damier ou, à l'aide d'un autre diviseur de rayons, qui est polarisant, sur deux autres panneaux de détecteurs de lumière en forme de matrice ou de damier, afin que le produit extérieur des vecteurs représentés par le panneau de sources lumineuses pouvant être commandées individuellement et par le modulateur de lumière à cellules modulatrices en forme de bandes, puisse être formé, et en ce que cet appareil possè des circuits électroniques qui traitent les signaux provenant des détecteurs ou excitent les cellules modulatrices, ou font ces deux opérations.

7. Multiplicateur optique de vecteurs selon la revendication 1, 3, 4 ou 5, caractérisé en ce qu'un ou plusieurs des dispositifs optiques qui se trouvent sur le trajet de la lumière après le dispositif modulateur, et qui servent à effectuer la multiplication dans une matrice vectorielle ou dans une matrice transposée vectorielle, sont réalisés en tant que dispositifs (74) de déviation de la lumière en forme de matrices ou de damiers, afin que l'on puisse disposer les détecteurs d'une façon quelconque, les éléments de ce dispositif de déviation de la lumière déviant ou divisant la lumière, ou les deux.

8. Multiplicateur optique de vecteurs selon la revendication 2 ou 6, caractérisé en ce qu'un ou plusieurs des dispositifs optiques qui se trouvent sur le trajet de la lumière après le dispositif modulateur, et qui servent à effectuer la multiplication dans une matrice vectorielle ou dans une matrice transposée vectorielle, sont réalisés en tant que dispositifs (84) de déviation de la lumière en forme de matrices ou de damiers, selon le cas, ou caractérisé en ce qu'un ou plusieurs des dispositifs optiques qui viennent, sur le trajet de la lumière, après le panneau de sources lumineuses pouvant être commandées individuellement, dispositifs qui divisent la lumière des sources lumineuses de telle manière qu'on obtient une répartition d'intensités parallèle par bandes, sont réalisés en tant que dispositifs (86) de déviation de la lumière en forme de matrices ou de damiers, afin que l'on puisse disposer d'une manière quelconque les détecteurs ou les sources lumineuses, ou les uns et les autres, les éléments de ces dispositifs de déviation de la lumière déviant la lumière ou la divisant, ou les deux, ou bien caractérisé en ce qu'il présente ces deux caractéristiques en même temps.

9. Multiplicateur optique de vecteurs selon la revendication 7 ou 8, caractérisé en ce qu'un ou plusieurs des dispositifs optiques de déviation de la lumière en forme de matrices ou de damiers, ou tous ces dispositifs, sont réalisés sous la forme de panneaux d'hologrammes ou de grilles de phases, ou les deux.

10. Multiplicateur optique de vecteurs selon la revendication 7, 8 ou 9, caractérisé en ce que les détecteurs se trouvant sur les panneaux (75, 85) de détecteurs de lumière ou, s'il en existe, les sources lumineuses se trouvant sur le panneau (81) de sources lumineuses, ou bien à la fois ces détecteurs et ces sources, sont disposés en forme de matrice et répartis d'une manière quelconque dans deux dimensions ou d'une manière quelconque dans trois dimensions.

11. Multiplicateur optique de vecteurs selon l'une des revendications 7 à 10, caractérisé en ce que les éléments du modulateur en forme de matrice ou de damier sont constitués par des modulateurs en forme de bandes (94, 95), ou bien soit de matrices, soit de damiers (102), ou les uns et les autres à la fois, afin que puissent être représentés des chiffres d'un système de numération quelconque, avec facultativement, sur les éléments du modulateur en forme de matrice ou de damier, des détecteurs de lumière (96, 103) ou des circuits électroniques, ou les uns et les autres, ces circuits traitant numériquement les signaux fournis par les détecteurs et commandant les cellules du modulateur, et en ce que les modulateurs en forme de bandes possèdent, le cas échéant, des bandes supplémentaires (98) sans fonction de modulation, afin de séparer les bandes du modulateur représentant des chiffres isolés.

12. Multiplicateur optique de vecteurs selon l'une des revendications 7 à 11, caractérisé en ce qu'on a placé, entre le dernier modulateur de lumière à cellules en forme de bandes et le modulateur (93) en forme de matrice ou de damier, des dispositifs (99) de déviation de la lumière, qui dévient la lumière ou la divisent, ou les deux, pour l'amener dans des détecteurs ou dans des cellules du modulateur en forme de matrice ou de damier, ou à la fois dans ces détecteurs et ces cellules, afin que des opérations arithmétiques supplémentaires puissent être effectuées.

13. Multiplicateur optique de vecteurs selon l'une des revendications 7 à 12, caractérisé en ce que les rayons lumineux sont dirigés dans des détecteurs par certaines parties des lignes ou des colonnes, ou des deux, du modulateur en forme de matrice ou de damier, en passant à travers le dispositif de déviation de la lumière en forme de matrice ou de damier, afin que des multiplications de vecteurs par la matrice ou par la matrice transposée, ou les deux, puissent être effectuées par des parties de la matrice qui est représentée dans le modulateur en forme de matrice ou de damier.

14. Multiplicateur optique de vecteurs selon l'une des revendications 1 à 13, caractérisé en ce que le modulateur en forme de matrice ou de damier est un panneau de cristaux liquides, ou que les cellules du modulateur en forme de bandes sont réalisées sous la forme de cristaux électro-optiques, ou les deux.

15. Multiplicateur optique de vecteurs selon l'une des revendications 1 à 14, caractérisé en ce que, sur le trajet de la lumière, des polarisateurs sont placés devant les détecteurs de lumière, ou que des diviseurs polarisants de rayons sont placés devant les panneaux de détecteurs de lumière, ou les deux, afin que le plan de polarisation des rayons lumineux puisse être utilisé.

16. Multiplicateur optique de vecteurs, caractérisé en ce qu'il comprend des multiplicateurs optiques de vecteurs selon l'une des revendications 1 à 15, montés en cascade les uns derrière les autres, ou montés en parallèle, ou les deux.

17. Multiplicateur optique de vecteurs selon l'une des revendications 1 à 16, caractérisé en ce qu'il est équipé de circuits électroniques supplémentaires qui se chargent, entre autres choses, de fonctions arithmétiques, de fonctions logiques, de fonctions de transmission de signaux ou de fonctions de stockage, ou de plusieurs de ces fonctions, ou de toutes, et en ce que, en variante, l'ensemble du fonctionnement est surveillé par un ordinateur normal, le résultat étant mis en mémoire selon un processus d'apprentissage.
